# EUROPÄISCHE PATENTSCHRIFT

(11) **EP 3 155 673 B1**
(45) Veröffentlichungstag und Bekanntmachung des Hinweises auf die Patenterteilung: **19.12.2018**
(21) Anmeldenummer: 15723841.1
(22) Anmeldetag: 19.05.2015
(51) Int. Cl.: H01M 2/14, H01M 2/16, H01M 4/58, H01M 4/38, H01M 10/052

(54) **SEPARATOR FÜR EINEN ELEKTROCHEMISCHEN SPEICHER, VERFAHREN ZUR HERSTELLUNG DES SEPARATORS SOWIE ELEKTROCHEMISCHER ENERGIESPEICHER**
SEPARATOR FOR AN ELECTROCHEMICAL STORAGE DEVICE, METHOD FOR PRODUCING THE SEPARATOR, AND ELECTROCHEMICAL ENERGY STORE DEVICE
SÉPARATEUR POUR ACCUMULATEUR ÉLECTROCHIMIQUE, PROCÉDÉ DE PRODUCTION DE SÉPARATEUR, ET ACCUMULATEUR D'ÉNERGIE ÉLECTROCHIMIQUE

(30) Priorität: 12.06.2014 DE 102014008742
(43) Veröffentlichungstag der Anmeldung: 19.04.2017
(73) Patentinhaber: Daimler AG, 70327 Stuttgart (DE)
(72) Erfinder: HINTENNACH, Andreas, 71732 Tamm (DE)
(74) Vertreter: JENSEN & SON
(86) Internationale Anmeldenummer: PCT/EP2015/001019
(87) Internationale Veröffentlichungsnummer: WO 2015/188913

(56) Entgegenhaltungen:
- DE-A1- 2 334 660
- DE-A1-102011 088 910
- DE-A1-102012 018 621
- DE-A1-102012 213 528
- JP-A- S5 097 394
- RAO B M L ET AL: "EFFECT OF SULFUR IMPURITIES ON Li/TiS2 CELLS", EXTENDED ABSTRACTS,, Bd. 80-2, 1. Januar 1980 (1980-01-01), XP001286722,

## Beschreibung

Die Erfindung betrifft einen Separator für einen elektrochemischen Energiespeicher gemäß dem Oberbegriff des Anspruchs 1. Weiterhin betrifft die Erfindung ein Verfahren zur Herstellung eines Separators. Darüber hinaus betrifft die Erfindung einen elektrochemischen Energiespeicher.

Aus der DE 10 2010 018 731 A1 ist eine Lithium-Schwefel-Batterie bekannt, welche einen Separator umfasst, der ein nicht-verwebtes Vlies aus Polymerfasern umfasst.

Weiterhin ist aus der DE 697 09 171 T2 ein elastisches Batterietrennmedium bekannt, welches ein elastisches, luftverlegtes Vlies von zufällig ausgerichteten, verfitzten Glasmikrofasern umfasst, wobei zumindest ein Teil der Mikrofasern im luftverlegten Vlies im Anschluss an die Sammlung der Mikrofasern zur Bildung des luftverlegten, fasrigen Vlieses weiter verfitzt wird, um die Zugfestigkeit des luftverlegten, fasrigen Vlieses zu erhöhen; wobei das luftverlegte, fasrige Vlies eine Masse zwischen etwa 50 und etwa 450 Gramm pro Quadratmeter aufweist; wobei die Mikrofasern einen mittleren Durchmesser zwischen etwa 1,0 und etwa 2,0 Mikrometer aufweisen; und das luftverlegte, fasrige Vlies erste und zweite Hauptoberflächen für den Kontakt mit den Hauptoberflächen der Elektrodenplatten einer Batterie aufweist, in der das luftverlegte, fasrige Vlies eingebaut ist. Das Trennmedium weist dabei eine Spannkraft auf, die es dem Trennmedium ermöglicht, den Kontakt mit den Elektrodenplatten aufrechtzuerhalten, während in einer Richtung senkrecht zu den Hauptoberflächen des luftverlegten, fasrigen Vlieses wiederholtes Komprimieren und Ausdehnen erfahren wird, wenn sich die Elektrodenplatten während der Betriebszeit der Batterie ausdehnen und zusammenziehen.

Rao B M L et al: "Effect of sulphur impurities on Li/TiS2 cells", Extended Abstracts, Bd. 80-2, 1. Januar 1980 (1980-01-01) beschreibt eine Li/TiS₂ Testzelle, in der auf Schwefel basierte Verunreinigungen zwischen den Zellelektroden wandern und Selbstentladung verursachen.

DE 10 2012 213 528 A1 offenbart ein Verfahren zur Herstellung einer Membran für einen Separator eines elektrochemischen Energiespeichers, insbesondere Lithium-Schwefel-Batterie, umfassend mindestens folgende Schritte: Bereitstellen eines inerten porösen Materials, Aufbringen eines chemisch inerten Polymers auf mindestens einer Seite des inerten porösen Materials. Es ist vorteilhaft, wenn bei dem Verfahren die Durchlässigkeit der Membran durch das Aufbringen des chemisch inerten Polymers auf dem inerten porösen Material der Membran eingestellt wird.

DE 10 2012 018 621 A1 offenbart das Imprägnieren eines porösen Substrats mit einem anionischen Polymer mit folgenden Schritten:
1. 20 Gew. -% Nafion®-Lösung für einige Stunden bei 80 °C im Umluft-Trockenschrank eindampfen;
2. Aus dem Rückstand durch Zusatz von Ethanol eine 10 Gew. -% Nafion®-Lösung herstellen;
3. Das poröse Substrat Celgard® 2500 für 1 h in die oben genannte Nafion®-Lösung einlegen;
4. Trocknung des Substrats bei 55 °C für 1 h im Umluft-Trockenschrank

JPS5097394 A offenbart ein Verfahren zum Herstellen eines Selensäure-Testblattes zur Krebsdiagnose, welches durch die Benetzung eines Glasfaservlies mit Salpetersäure hergestellt wird.

Der Erfindung liegt die Aufgabe zu Grunde, ein gegenüber dem Stand der Technik verbesserten Separator für einen elektrochemischen Energiespeicher, ein verbessertes Verfahren zur Herstellung eines solchen Separators und einen verbesserten elektrochemischen Energiespeicher anzugeben.

Hinsichtlich des Separators wird die Aufgabe erfindungsgemäß mit den in Anspruch 3 angegebenen Merkmalen, hinsichtlich des Verfahrens mit den in Anspruch 1 angegebenen Merkmalen und hinsichtlich des elektrochemischen Energiespeichers mit den in Anspruch 8 angegebenen Merkmalen gelöst.

Ein Separator für einen elektrochemischen Speicher ist zwischen einer Anode und einer Kathode des elektrochemischen Speichers anordbar, wobei der Separator aus einem semipermeablen Trägermaterial geformt ist. Erfindungsgemäß ist vorgesehen, dass das Trägermaterial aus einem Glasfaservlies gebildet ist, wobei zumindest eine Oberflächenseite des Glasfaservlieses derart modifiziert ist, dass diese für ein Aktivmaterial der Kathode impermeabel ist, wobei der Separator mittels des Verfahrens nach einem der Ansprüche 1 oder 2 hergestellt ist. Dabei umfasst das Aktivmaterial der Kathode insbesondere Schwefelverbindungen.

Beim Entladen der Batterie können Schwefelverbindungen entstehen, welche beim Ladevorgang möglicherweise nicht vollständig zu elementaren Schwefel umgewandelt werden. Durch die Impermeabilität des Separators kann eine Diffusion dieser Schwefelverbindungen zur Anode verhindert oder zumindest verringert werden. Die Schwefelverbindungen können an der Anode eine Lithiumsulfid-Schicht bilden, die eine Kapazität und damit eine Lebensdauer der Batterie erheblich verringern. Zudem wird das in der Kathode eingebettete Aktivmaterial, insbesondere Schwefel, sukzessive abgebaut. Der derart ausgebildete Separator erhöht somit eine Lebensdauer des elektrochemischen Speichers.

Zweckmäßigerweise ist das Glasfaservlies für ein Aktivmaterial der Anode permeabel, wobei das Aktivmaterial der Anode Metall-Ionen umfasst. Damit sind Lade- und Entladeprozesse des elektrochemischen Speichers sichergestellt, da so die Metall-Ionen durch den Separator von der Anode zur Kathode und umgekehrt transportiert werden können.

In dem Glasfaservlies ist dabei ein Elektrolyt angeordnet, welcher in einer bevorzugten Ausführungsvariante ein organischer, flüssiger Elektrolyt ist. Alternativ kann es sich bei dem Elektrolyten auch um einen Festkörperelektrolyten handeln. Der Elektrolyt stellt dabei einen lonenaustausch zwischen der Kathode und der Anode sicher.

Zur Herstellung des zuvor beschriebenen Separators wird ein erfindungsgemäßes Verfahren vorgeschlagen, welches folgende Schritte umfasst:
a) Oberflächliche, homogene Benetzung des Glasfaservlieses zumindest auf einer Oberflächenseite mit konzentrierter Salpetersäure
b) Thermisches Pressen des mit Salpetersäure benetzten Glasfaservlieses,
c) Trocknen des gepressten Glasfaservlieses unter Einwirkung einer vorgegebenen Temperatur,
d) Reinigen des getrockneten Glasfaservlieses mit demineralisierten Wasser,
e) Trocknen des gereinigten Glasfaservlieses unter Einwirkung eines Unterdrucks,
f) Pressen des getrockneten Glasfaservlieses und abschließendes Abkühlen des gepressten Glasfaservlieses.

Das Verfahren ermöglicht eine Oberflächenmodifikation zumindest einer Oberflächenseite des Glasfaservlieses, so dass dieses auf der modifizierten Oberflächenseite für das Aktivmaterial der Kathode, insbesondere für Schwefelverbindungen wie Polysulfide, impermeabel, aber weiterhin permeabel für das Aktivmaterial der Anode, z. B. Lithium-Ionen, ist. Dies ermöglicht eine gegenüber dem Stand der Technik verbesserte Leistungsfähigkeit des elektrochemischen Energiespeichers, da das kathodische Aktivmaterial weiterhin in der Kathode verbleibt und eine Anlagerung von kathodischen Aktivmaterial in der Anode weitestgehend vermieden wird.

Erfindungsgemäß wird das Glasfaservlies gemäß Schritt a) mit Salpetersäure benetzt. Durch die Benetzung des Glasfaservlieses mit Salpetersäure bildet sich auf der benetzten Oberfläche eine semipermeable Schicht, welche insbesondere für Schwefelverbindungen undurchlässig ist.

Zur Herstellung einer mechanisch stabilen Oberflächenmodifikation des Glasfaservlieses wird dieses nach dem Benetzten mit Säure gemäß Schritt b) und nach dem Trocknen und Reinigen gemäß Schritt f) flachgepresst. Durch das Flachpressen entsteht eine dauerhafte Oberflächenmodifikation des Glasfaservlieses, mittels der eine hohe Leistungsfähigkeit und Lebensdauer des elektrochemischen Energiespeichers erreicht werden kann.

Darüber hinaus betrifft die Erfindung einen elektrochemischen Energiespeicher mit zumindest einem zuvor beschriebenen Separator.

Vorteilhafte Ausgestaltungen der Erfindung sind Gegenstand der Unteransprüche.

Ausführungsbeispiele der Erfindung werden im Folgenden anhand von Zeichnungen näher erläutert.

Dabei zeigen:
- Fig. 1: schematisch eine Explosionsdarstellung einer Einzelzelle für eine Batterie und
- Fig. 2: schematisch einen Verfahrensablauf zur Herstellung eines Separators für die Einzelzelle mit Komponenten einer Vorrichtung zur Herstellung des Separators in perspektivischer Ansicht

Einander entsprechende Teile sind in allen Figuren mit den gleichen Bezugszeichen versehen.

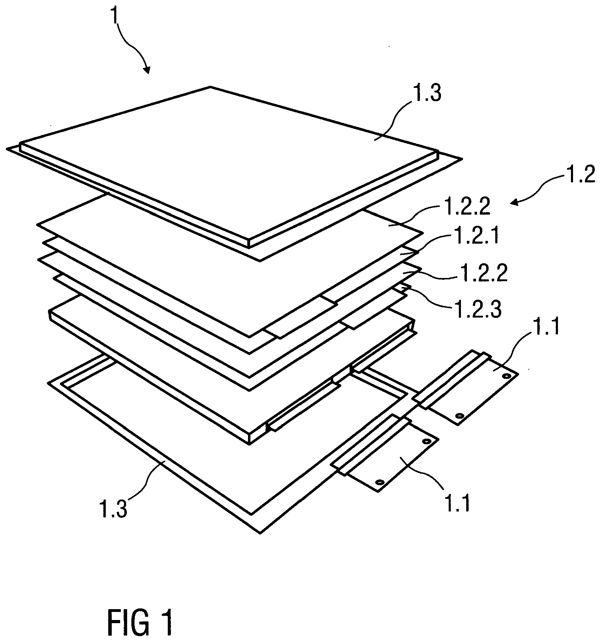

In Figur 1 ist eine Einzelzelle 1 für eine nicht näher dargestellte Batterie gezeigt. Bei der Batterie handelt es sich insbesondere um eine aufladbare Batterie, z. B. eine Lithium-Schwefel-Batterie.

Bei der Einzelzelle 1 handelt es sich um eine sogenannten Pouch- oder Coffee-Bag-Zelle, wobei zur Bildung der Batterie eine Anzahl solcher Einzelzellen 1 elektrisch seriell und/oder parallel miteinander verschaltet ist und wobei die Verschaltung über blechförmige Ableiter 1.1 als elektrische Anschlüsse der Einzelzelle 1 erfolgt.

Eine solche Einzelzelle 1 ist als ein flaches, weitestgehend rechteckförmiges Speicherelement für Elektroenergie ausgeführt, welches eine Elektrodenfolienanordnung 1.2 aus Lagen mehrerer abwechselnd gestapelter, folienartiger Anoden 1.2.1, Separatoren 1.2.2 und Kathoden 1.2.3 umfasst, die von einer aus zwei schalenartig geformten Folienabschnitten gebildeten folienartigen Hülle 1.3 umgeben ist. Die Anode 1.2.1 und die Kathode 1.2.3 werden im Folgenden auch als Elektroden zusammengefasst bezeichnet.

Die Elektroden der Einzelzelle 1 sind jeweils aus einem Substrat gebildet und mit einer elektrisch leitfähigen Matrix, in die ein Aktivmaterial in definierter Art und Weise eingebunden ist, beschichtet. Die Elektroden sind hierbei als Festkörper ausgebildet, wobei die Batterie vorzugsweise auch für hohe Temperaturbereiche und damit als Hochtemperatur-Batterie eingesetzt werden kann.

Die elektrisch leitfähige Matrix für die Kathode 1.2.3 ist aus einer elektrisch leitfähigen Kohlenstoffstruktur, wie z. B. Graphit oder Ruß, gebildet, welche vorzugsweise porös und mechanisch flexibel ausgebildet ist. Die elektrisch leitfähige Matrix für die Anode 1.2.1 ist aus einer elektrisch leitfähigen Kohlenstoffstruktur und einer Siliziumstruktur gebildet, da Silizium zwar eine weniger gute elektrische Leitfähigkeit aufweist als Kohlenstoff, dafür aber eine größere Menge von Aktivmaterial einbinden kann.

Das Aktivmaterial kann homogen über die gesamte Elektrode in die elektrisch leitfähige Matrix eingebunden werden. Das Aktivmaterial dient einer zwischen der Anode 1.2.1 und der Kathode 1.2.3 ablaufenden chemischen Reaktion, insbesondere bei einem Ladevorgang und Entladevorgang der Batterie. Ist die Batterie als eine Lithium-Schwefel-Batterie ausgebildet, so ist das Aktivmaterial für die Kathode 1.2.3 z. B. Schwefel und für die Anode 1.2.1 Lithium oder eine Lithiumlegierung.

Beim Entladen der Batterie wird das in der in der Anode 1.2.1 interkalierte Lithium in Lithium-Ionen und Elektronen oxidiert. Die Lithium-Ionen wandern durch den Separator 1.2.2 zur Kathode 1.2.3, während gleichzeitig die Elektronen über einen äußeren Stromkreis von der Anode 1.2.1 zur Kathode 1.2.3 übertragen werden, wobei zwischen der Kathode 1.2.3 und der Anode 1.2.1 ein Energieverbraucher zwischengeschaltet sein kann, welcher durch den Elektronenstrom mit Energie versorgt wird. An der Kathode 1.2.3 werden die Lithium-Ionen durch eine Reduktionsreaktion aufgenommen, wobei der Schwefel zu Lithiumsulfid reduziert wird.

Die elektrochemische Reaktion beim Entladen einer Batterie ist allgemein bekannt und kann am Beispiel einer Lithium-Schwefel-Batterie wie folgt beschrieben werden:
Anode 1.2.1: Li → Li⁺ + e⁻;
Kathode 1.2.3: S₈ + 2Li⁺ + e⁻ → Li₂S₈ → Li₂S₆ → Li₂S₄ → Li₂S₂ → Li₂S

Beim Laden der Batterie wird an die Elektroden eine Energiequelle angeschlossen. Dabei wird das Lithium aus dem Lithiumsulfid zu Lithium-Kationen und Elektronen oxidiert, wobei die Lithium-Kationen über den Separator 1.2.2 und die Elektronen über den äußeren Stromkreis zurück zur Anode 1.2.1 wandern.

Um den Ionentransport des Aktivmaterials der Anode zwischen der Anode 1.2.1 und der Kathode 1.2.1 zu ermöglichen, ist der Separator 1.2.2 permeabel für das Aktivmaterial der Anode 1.2.1, d. h. beispielsweise für Lithium-Ionen, ausgebildet.

Die Erfindung sieht vor, dass der Separator 1.2.2 zusätzlich impermeabel für Schwefelverbindungen, d. h. Sulfid-Anionen und Polysulfid-Anionen, ist, welche beim Entladen der Batterie entstehen können und die beim Ladevorgang möglicherweise nicht vollständig zu elementaren Schwefel umgewandelt werden. Dies verhindert oder minimiert zumindest den Transport solch schwerlöslicher Schwefelverbindungen zur Anode 1.2.1, welche eine Kapazität und damit eine Lebensdauer der Batterie erheblich verringern. Zudem wird durch den Transport der Schwefelverbindungen zur Anode 1.2.1 das in der elektrisch leitfähigen Matrix der Kathode 1.2.3 eingebettete Aktivmaterial sukzessive abgebaut.

Zur Realisierung einer solchen Semipermeabilität sieht die Erfindung einen Separator 1.2.2 vor, welcher aus einem Glasfaservlies 1.2.2.1 mit einem darin angeordneten, beispielsweise organischen, flüssigen Elektrolyten gebildet ist, wobei das Glasfaservlies 1.2.2.1 zumindest eine modifizierte Oberflächenseite aufweist, die impermeabel für Schwefelverbindungen ist.

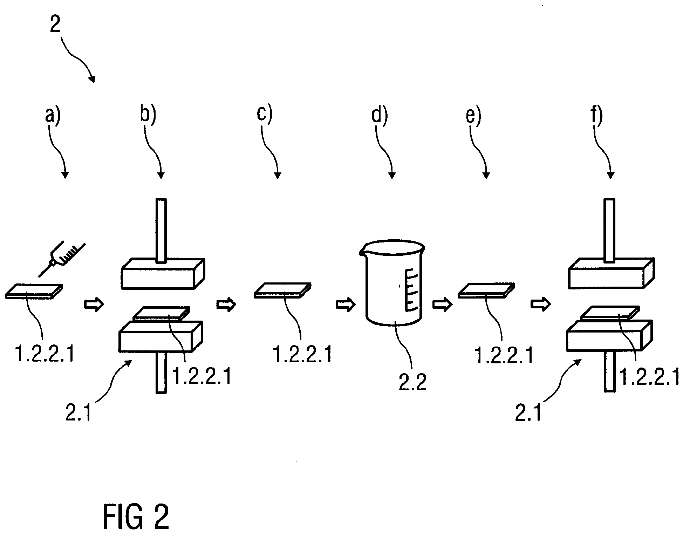

Dazu zeigt Figur 2 eine Vorrichtung 2 zur Herstellung eines solchen Separators 1.2.2 in perspektivischer Ansicht im Rahmen eines Verfahrensablaufs.

Die Vorrichtung 2 umfasst eine Presseinrichtung 2.1, die aus zwei stempelförmigen Presselementen gebildet ist, zwischen denen das Glasfaservlies 1.2.2.1 zum Flachpressen desselben angeordnet wird. Weiterhin umfasst die Vorrichtung 2 einen Behälter 2.2, in dem demineralisiertes Wasser eingefüllt ist. Darüber hinaus umfasst die Vorrichtung 2 eine nicht dargestellte Unterdruckeinrichtung.

In einem ersten Schritt a) wird das Glasfaservlies 1.2.2.1 mit konzentrierter Salpetersäure, oberflächlich und möglichst homogen benetzt. Beispielsweise erfolgt dies durch Aufpressen des Glasfaservlieses 1.2.2.1 auf ein vollständig in Säure getränktes weiteres Vlies, welches nicht dargestellt ist. Dabei kann das Glasfaservlies 1.2.2.1 auf einer Oberflächenseite oder auf beiden Oberflächenseiten mit der Säure benetzt werden.

In einem zweiten Schritt b) wird das mit der Salpetersäure benetzte Glasfaservlies 1.2.2.1 mittels der Presseinrichtung 2.1 bei einer vorgegebenen Temperatur, z. B. im Bereich zwischen 80 Grad Celsius und 120 Grad Celsius, flachgepresst. Dazu wird das Glasfaservlies 1.2.2.1 zwischen den Presselementen angeordnet und mit einer vorgegebenen Kraft, z. B. zwischen 20 kg cm⁻² und 60 kg cm⁻², flachgepresst. Die Presselemente selbst sind dabei beheizbar ausgebildet, so dass das
Glasfaservlies 1.2.2.1 auf die vorgegebene Temperatur während des Pressens erwärmt werden kann.

In einem dritten Schritt c) wird das thermisch gepresste Glasfaservlies 1.2.2.1 unter Einwirkung einer vorgegebenen Temperatur, insbesondere bei einer Temperatur > 100 Grad Celsius, vollständig getrocknet.

In einem vierten Schritt d) wird das vollständig getrocknete Glasfaservlies 1.2.2.1 mit dem in dem Behälter 2.2 eingefüllten demineralisierten Wasser gereinigt. Der dargestellte Behälter 2.2 stellt hierbei nur eine beispielhafte Aufbewahrung des demineralisierten Wassers dar. Im Rahmen der Erfindung kann auch jede andere Art der Aufbewahrung des demineralisierten Wassers möglich sein.

In einem fünften Schritt e) wird das gereinigte Glasfaservlies 1.2.2.1 unter Einwirkung eines Unterdrucks gereinigt. D. h. es erfolgt ein sogenanntes Vakuumtrocknen des gereinigten Glasfaservlieses 1.2.2.1. Die Vakuumtrocknung kann beispielsweise mittels eines Vakuumtrockenschranks erfolgen.

In einem sechsten Schritt f) wird das unter Vakuum getrocknete Glasfaservlies 1.2.2.1 für eine vorgegebene Zeitdauer erneut thermisch flachgepresst, wobei eine Kraft und eine Temperatur beim Flachpressen gegenüber dem zweiten Schritt b) jeweils leicht erhöht werden. Das thermisch gepresste Glasfaservlies 1.2.2.1 wird abschließend vollständig abgekühlt.

## Patentansprüche

1. Verfahren zur Herstellung eines Separators (1.2.2) für einen elektrochemischen Speicher, welcher zwischen einer Anode (1.2.1) und einer Kathode (1.2.3) des elektrochemischen Speichers anordbar ist, wobei der Separator (1.2.2) aus einem semipermeablen Trägermaterial geformt ist,
**gekennzeichnet durch** folgende Schritte:
a) Oberflächliche, homogene Benetzung des Glasfaservlieses (1.2.2.1) zumindest auf einer Oberflächenseite mit konzentrierter Salpetersäure,
b) Thermisches Pressen des mit Salpetersäure benetzten Glasfaservlieses (1.2.2.1),
c) Trocknen des gepressten Glasfaservlieses (1.2.2.1) unter Einwirkung einer vorgegebenen Temperatur,
d) Reinigen des getrockneten Glasfaservlieses (1.2.2.1) mit demineralisierten Wasser,
e) Trocknen des gereinigten Glasfaservlieses (1.2.2.1) unter Einwirkung eines Unterdrucks,
f) Pressen des getrockneten Glasfaservlieses (1.2.2.1) und abschließendes Abkühlen des gepressten Glasfaservlieses (1.2.2.1).

2. Verfahren nach Anspruch 1,
**dadurch gekennzeichnet, dass** das Glasfaservlies (1.2.2.1) gemäß Schritt b) und f) flachgepresst wird.

3. Separator (1.2.2) für einen elektrochemischen Speicher, welcher zwischen einer Anode (1.2.1) und einer Kathode (1.2.3) des elektrochemischen Speichers anordbar ist, wobei der Separator (1.2.2) aus einem semipermeablen Trägermaterial geformt ist, wobei das Trägermaterial aus einem Glasfaservlies (1.2.2.1) gebildet ist, wobei zumindest eine Oberflächenseite des Glasfaservlieses (1.2.2.1) derart modifiziert ist, dass diese für ein Aktivmaterial der Kathode (1.2.3) impermeabel ist, wobei der Separator mittels des Verfahrens nach einem der Ansprüche 1 oder 2 hergestellt ist.

4. Separator (1.2.2) nach Anspruch 3,
**dadurch gekennzeichnet, dass** das Glasfaservlies (1.2.2.1) auf der zumindest einen Oberflächenseite für Schwefelverbindungen impermeabel ist.

5. Separator (1.2.2) nach Anspruch 3 oder 4,
**dadurch gekennzeichnet, dass** das Glasfaservlies (1.2.2.1) für ein Aktivmaterial der Anode (1.2.1) permeabel ist, wobei das Aktivmaterial der Anode (1.2.1) Metall-Ionen umfasst.

6. Separator (1.2.2) nach einem der Ansprüche 3 bis 5,
**dadurch gekennzeichnet, dass** in dem Glasfaservlies (1.2.2.1) ein Elektrolyt angeordnet ist.

7. Separator (1.2.2) nach Anspruch 6,
**dadurch gekennzeichnet, dass** der Elektrolyt ein organischer, flüssiger Elektrolyt ist.

8. Elektrochemischer Energiespeicher, umfassend zumindest einen Separator (1.2.2) nach einem der Ansprüche 3 bis 7.

## Claims

1. Method for the production of a separator (1.2.2) for an electrochemical storage device, which separator (1.2.2) can be located between an anode (1.2.1) and a cathode (1.2.3) of the electrochemical storage device, the separator (1.2.2) being made from a semi-permeable carrier material,
**characterised by** the following steps:
a) the superficial homogenous wetting of the glass fibre matting (1.2.2.1) with concentrated nitric acid on at least one surface,
b) the thermal pressing of the glass fibre matting (1.2.2.1) wetted with nitric acid,
c) the drying of the pressed glass fibre matting (1.2.2.1) under the action of a preset temperature,
d) the cleaning of the dries glass fibre matting (1.2.2.1) with demineralised water,
e) the drying of the cleaned glass fibre matting (1.2.2.1) under the action of a vacuum,
f) the pressing of the dried glass fibre matting (1.2.2.1) and the final cooling of the pressed glass fibre matting (1.2.2.1).

2. Method according to claim 1,
**characterised in that** the glass fibre matting (1.2.2.1) is pressed flat according to steps b) and d).

3. Separator (1.2.2) for an electrochemical storage device, which separator (1.2.2) can be located between an anode (1.2.1) and a cathode (1.2.3) of the electrochemical storage device, the separator (1.2.2) being made from a semi-permeable carrier material, wherein the carrier material is represented by a glass fibre matting (1.2.2.1), wherein at least one surface side of the glass fibre matting (1.2.2.1) is modified in such a way that it is impermeable to an active material of the cathode (1.2.3), the separator being produced by means of the method according to claim 1 or 2.

4. Separator (1.2.2) according to claim 3,
**characterised in that** the glass fibre matting (1.2.2.1) is impermeable to sulphur compounds on the at least one surface side.

5. Separator (1.2.2) according to claim 3 or 4,
**characterised in that** the glass fibre matting (1.2.2.1) is permeable to an active material of the anode (1.2.1), the active material of the anode (1.2.1) comprising metal ions.

6. Separator (1.2.2) according to any of claims 3 to 5,
**characterised in that** an electrolyte is located in the glass fibre matting (1.2.2.1).

7. Separator (1.2.2) according to claim 6,
**characterised in that** the electrolyte is an organic liquid electrolyte.

8. Electrochemical energy storage device, comprising at least one separator (1.2.2) according to any of claims 3 to 7.

## Revendications

1. Procédé de fabrication d'un séparateur (1.2.2) pour un accumulateur électrochimique qui peut être disposé entre une anode (1.2.1) et une cathode (1.2.3) de l'accumulateur électrochimique, le séparateur (1.2.2) étant constitué d'un matériau support semi-perméable, **caractérisé par** les étapes suivantes consistant :
a) au mouillage homogène, superficiel du non-tissé en fibre de verre (1.2.2.1) au moins sur une face au moyen d'un acide nitrique concentré,
b) au pressage thermique du non tissé en fibre de verre mouillé (1.2.2.1) à l'aide de l'acide nitrique,
c) au séchage du non-tissé en fibre de verre pressé (1.2.2.1) sous l'action d'une température prédéfinie,
d) au nettoyage du non-tissé en fibre de verre séché (1.2.2.1) à l'aide d'eau déminéralisé,
e) au séchage du non-tissé nettoyé (1.2.2.1) sous l'action d'un vide,
f) au pressage du non-tissé en fibre de verre séché (1.2.2.1) et au refroidissement subséquent du non-tissé en fibre de verre pressé (1.2.2.1).

2. Procédé selon la revendication 1, **caractérisé en ce que** le non-tissé en fibre de verre (1.2.2.1) est aplati selon l'étape b) et f).

3. Séparateur (1.2.2) pour un accumulateur électrochimique qui peut être disposé entre une anode (1.2.1) et une cathode (1.2.3) de l'accumulateur électrochimique, le séparateur (1.2.2) étant constitué d'un matériau de support semi-perméable, le matériau de support étant constitué d'un non-tissé en fibre de verre (1.2.2.1), au moins une face du non-tissé en fibre de verre (1.2.2.1) étant modifiée de telle sorte qu'elle devienne imperméable à un matériau actif de la cathode (1.2.3), le séparateur étant fabriqué selon le procédé selon l'une des revendications 1 ou 2.

4. Séparateur (1.2.2) selon la revendication 3, **caractérisé en ce que** le non-tissé en fibre de verre (1.2.2.1) sur l'au moins une face est imperméable aux composés du soufre.

5. Séparateur (1.2.2) selon la revendication 3 ou la revendication 4, **caractérisé en ce que** le non-tissé en fibre de verre (1.2.2.1) est perméable à un matériau actif de l'anode (1.2.1), le matériau actif de l'anode (1.2.1) comprenant des ions métalliques.

6. Séparateur (1.2.2) selon l'une quelconque des revendications 3 à 5, **caractérisé en ce qu'**un électrolyte est disposé dans le non-tissé en fibre de verre (1.2.2.1).

7. Séparateur (1.2.2) selon la revendication 6, **caractérisé en ce que** l'électrolyte est un électrolyte liquide, organique.

8. Accumulateur d'énergie électrochimique, comprenant au moins un séparateur (1.2.2) selon l'une quelconque des revendications 3 à 7.
